Europäisches Patentamt

European Patent Office

Office européen des brevets

(19)

(11) **EP 0 963 991 B1**

## (12) EUROPÄISCHE PATENTSCHRIFT

(45) Veröffentlichungstag und Bekanntmachung des Hinweises auf die Patenterteilung:
**07.11.2001 Patentblatt 2001/45**

(51) Int Cl.$^7$: **C07F 7/02**, C07F 7/16

(21) Anmeldenummer: **99101758.3**

(22) Anmeldetag: **11.02.1999**

(54) **Verfahren zur Herstellung von Organochlorsilanen**

Process for preparing organochlorosilanes

Procédé pour la préparation d'organochlorosilanes

(84) Benannte Vertragsstaaten:
**DE FR GB**

(30) Priorität: **21.04.1998 DE 19817775**

(43) Veröffentlichungstag der Anmeldung:
**15.12.1999 Patentblatt 1999/50**

(73) Patentinhaber: **Wacker-Chemie GmbH**
**81737 München (DE)**

(72) Erfinder:
• **Kalchauer, Wilfried Dr.**
**84489 Burghausen (DE)**

• **Straussberger, Herbert**
**84561 Mehring/Öd (DE)**
• **Streckel, Willi**
**84561 Mehring/Öd (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**US-A- 4 864 044**

**Beschreibung**

Die Erfindung betrifft ein Verfahren zur Direktsynthese von Methylchlorsilanen nach Müller-Rochow, bei dem die Kontaktmasse vor der Reaktion durch eine Behandlung mit HCl aktiviert wird.

Bei der Müller-Rochow-Direktsynthese wird Methylchlorid mit Silicium in Gegenwart eines Kupferkatalysators und geeigneten Promotoren zu Methylchlorsilanen umgesetzt, wobei neben einer möglichst hohen Produktivität (Menge an gebildeten Silanen pro Zeiteinheit und eingesetztem Silicium) auch eine möglichst hohe Selektivität bezogen auf das Zielprodukt Dimethyldichlorsilan gefordert wird. Dimethyldichlorsilan wird beispielsweise für die Herstellung von linearen Polysiloxanen benötigt.

Trotz der hohen wirtschaftlichen Bedeutung der Direktsynthese sind deren naturwissenschaftlichen Hintergründe teilweise noch nicht erforscht. Nach Lieske et al. in Silicone for Chemical Industry, Geiranger-Norway, 16. - 18. June 1992, ist aufgrund der Teilnahme von drei Feststoffen an der Reaktion, nämlich Silicium, Katalysator und Promotoren, die Reproduzierbarkeit der Experimente oft schlecht. In der Praxis laufen unterschiedliche Ansätze der Direktsynthese trotz gleicher Stoff- und Reaktionsparameter mit unterschiedlichen Ergebnissen ab.

Die Direktsynthese kann diskontinuierlich oder kontinuierlich durchgeführt werden, in der industriellen Produktion wird nur die kontinuierliche Ausführungsform angewendet. Die kontinuierliche Direktsynthese wird in Wirbelschichtreaktoren durchgeführt, in denen Methylchlorid gleichzeitig als Fluidisierungsmedium und Reaktant eingesetzt wird. Das benötigte Silicium wird zuvor zu einem Pulver der Korngröße 20 bis 700 μm vermahlen und mit Kupferkatalysator und Promotoren zur Kontaktmasse vermischt.

Einer Produktionskampagne der kontinuierlichen Direktsynthese ist die Reaktor-Aufheizphase vorgeschaltet, in welcher die Kontaktmasse auf Reaktionstemperatur aufgeheizt wird. Eine Produktionskampagne der kontinuierlichen Direktsynthese wird mit der Induktionsphase begonnen. Mit Beginn der Induktionsphase wird Methylchlorid in die erhitzte Kontaktmasse eingeleitet. Darauf folgt die Startphase, in welcher die Rohsilanbildung einsetzt. Die Reaktion läuft vorerst mit geringer Selektivität und Reaktivität ab. Anschließend wird die stabile Produktionsphase erreicht. Die Produktionskampagne endet, wenn kein Methylchlorid mehr in die Kontaktmasse eingeleitet wird.

Beim kontinuierlichen Betrieb eines Reaktors fallen in einer Produktionskampagne nach einer weitgehend stabilen Produktionsphase die Produktionsrate bezogen auf Methylchlorsilane und die Selektivität bezogen auf das Zielprodukt Dimethyldichlorsilan ab. Deshalb muß die Produktionskampagne nach einer bestimmten Zeit beendet werden. Eine Produktionskampagne dauert deshalb meist nur einige Tage bis mehrere Wochen.

Der Reaktor wird nach Beendigung einer Produktionskampagne entleert, neu mit Silicium, Kupferkatalysator und Promotoren befüllt und wieder auf Reaktionsbedingungen gebracht. Daraus ist ersichtlich, daß durch eine Steigerung der Produktionsrate wie auch durch eine zeitliche Verlängerung der Produktionskampagne bei gleichbleibender Selektivität die Wirtschaftlichkeit der Direktsynthese erhöht werden kann.

Die Aktivierung der Kontaktmasse vor der Umsetzung mit Methylchlorid durch eine Vorreaktion mit HCl ist beispielsweise bekannt aus US-A-4,864,044. Dort ist in den Beispielen ein Verfahren beschrieben, bei dem Silicium, Kupferkatalysator und gegebenfalls Zinnpromotor jedoch in Abwesenheit von Zinkpromotoren bei ca. 325°C durch HCl aktiviert werden können. Die Nachteile bei dieser Form der Aktivierung sind darin zu sehen, daß Zink bzw.

Zinkverbindungen erst nach der Aktivierung zugesetzt werden können, da Zink mit HCl unter den angegebenen Reaktionsbedingungen leicht sublimierbares Zinkchlorid bildet und somit während der Aktivierung aus der Kontaktmasse entfernt werden kann, daß für die Aktivierung ein eigener Reaktor erforderlich ist bzw. die Reaktionsprodukte aus der Aktivierung, insbesondere Trichlorsilan und Tetrachlorsilan, unerwünschte Nebenprodukte der Methylchlorsilansynthese darstellen, daß durch die Aktivierung mindestens 1 bis 2 % des eingesetzten Rohstoffes Silicium verbraucht werden und daß eine relativ hohe Aktivierungstemperatur benötigt wird.

Aufgabe der vorliegenden Erfindung war es, ein Verfahren zur Direktsynthese von Methylchlorsilanen nach Müller-Rochow bereitzustellen, bei dem unter Beibehaltung der Selektivität bezüglich Dimethyldichlorsilan die Produktivität erhöht werden kann, ohne daß die zuvor genannten Nachteile aus US-A-4,864,044 zum Tragen kommen.

Gegenstand der Erfindung ist ein Verfahren zur Direktsynthese von Methylchlorsilanen durch Umsetzung von Methylchlorid mit einer Kontaktmasse, welche Silicium, Kupferkatalysator, Zink-Promotoren und Zinn- und/oder Antimon-Promotoren enthält, bei dem eine Kontaktmasse eingesetzt wird, welche vor Einsatz in der Reaktionskampagne durch Behandlung mit HCl aktiviert worden ist.

Die Aktivierung der Kontaktmasse mit HCl erfolgt während der Reaktor-Aufheizphase, wobei die HCl-Aktivierung unterhalb jener Temperatur abgeschlossen ist, bei der die Umsetzung von Silicium mit HCl zu Hydrogenchlorsilanen im nennenswerten Ausmaß erfolgt bzw. bei der sich eine Schmelzephase aus CuCl und $ZnCl_2$ ausbilden kann. Der Schmelzpunkt einer eutektischen Mischung aus CuCl und $ZnCl_2$ liegt nach H.A. Oye; Silicon for the Chemical Industry II, Loen-Norwegen, 06.1994 bei etwa 235°C.

Die Aktivierung der Kontaktmasse mit HCl erfolgt bevorzugt bei mindestens 60°C, insbesondere mindestens 110°C, da unter diesen Bedingungen eventuell durch die Aktivierung gebildetes Reaktionswasser rasch aus dem System ausgetragen werden kann. Die Temperatur beträgt vorzugsweise höchstens 200°C, besonders bevorzugt höchstens 180°C.

HCl kann alleine oder im Gemisch mit anderen unter Aktivierungsbedingungen gasförmigen Stoffen eingesetzt werden. In einer bevorzugten Ausführungsform wird HCl dem Gasstrom zugemischt, der in der Reaktor-Aufheizphase durch den Reaktor geleitet wird. Dieser kann beispielsweise ein Inertgas wie z.B. Stickstoff oder Argon oder das spätere Reaktionsgas, insbesondere Methylchlorid, sein.

Die Konzentration an zudosierter HCl im Gasstrom hängt hauptsächlich von der Dosierdauer, der Temperatur, bei der die Zudosierung erfolgt, und der absoluten zudosierten HCl-Menge ab. In einer bevorzugten Ausführungsform wird dem Gasstrom, der durch die Kontaktmasse geleitet wird, HCl in einer Menge von 1 bis 30 Vol.% zugemischt.

Die Dauer der HCl Dosierung hängt hauptsächlich von der Temperatur, bei der die Zudosierung erfolgt, wie auch von der absoluten zudosierten Menge ab. Sie kann im Bereich von einigen Minuten bis zu einigen Stunden liegen. Eine zu geringe HCl-Dosierung führt zu einer geringeren Erhöhung der Produktivität.

Die gesamte Gasmenge, die während der Aufheizphase durch den Reaktor geleitet wird, richtet sich nach den jeweiligen Reaktorabmessungen und nach den Korngrößen der eingesetzten Rohstoffe.Der Gasstrom dient vorzugsweise als Fluidisierungsmedium.

Die Zubereitung der Kontaktmasse erfolgt durch einfaches Mischen der Einzelkomponenten bei Raumtemperatur. Eine anschließende thermische Behandlung der Kontaktmasse unter Ausschluß von HCl vor dem Einbringen in den Reaktor ist möglich, wird aber in der bevorzugten Ausführungsform nicht durchgeführt.

Beim erfindungsgemäßen Verfahren wird in einer bevorzugten Ausführungsform Silicium in einer Korngröße von kleiner 700μm und größer 20μm, besonders bevorzugt in einer Korngröße von kleiner 500μm und größer 50μm, eingesetzt. Das eingesetzte Silicium weist üblicherweise einen Reinheitsgrad von >98% auf.

Beim erfindungsgemäßen Verfahren wird a) Kupfer vorzugsweise in Form von Kupferoxid-Gemischen, in Form von Kupfer(II)oxid, in Form von CuCl oder in Form von $CuCl_2$ eingesetzt. Im Falle von Mischoxiden der allgemeinen Formel $CuO_x$ weist x einen Wert von 0,6 bis 1 auf, bevorzugt ist ein Wert von mindestens 0,7. Die beschriebenen Kupferoxide können beispielsweise nach dem in US-A- 5,306,328 beschrieben Verfahren hergestellt werden, wobei der Oxidationsgrad durch die Trocknungstemperatur und die Verweilzeit bei dieser Temperatur gezielt eingestellt werden kann. Vorzugsweise werden 0,5 bis 10 Gew.%, insbesondere 0,7 bis 7 Gew.% Kupferkatalysator, bezogen auf metallisches Kupfer und Silicium verwendet, besonders bevorzugt sind 1 bis 5 Gew.%.

Beim erfindungsgemäßen Verfahren wird b) Zink vorzugsweise in Form von metallischem Zink, auch als Legierung mit Kupfer, Zinn und/oder Antimon, Zinkoxid, oder -chlorid eingesetzt. Die Menge an eingesetztem Zink beträgt vorzugsweise 0,5 bis 60 Gew.%, insbesondere 2 bis 40 Gew.% Zn, bezogen auf Kupfer, besonders bevorzugt werden 5 bis 30 Gew.% Zn eingesetzt.

Beim erfindungsgemäßen Verfahren werden c) Antimon und/oder Zinn vorzugsweise als Metalle eingesetzt. Die Menge an eingesetztem Antimon oder Zinn beträgt bevorzugt 200 bis 8000 ppm, insbesondere 300 bis 4000 ppm, bezogen auf das eingesetzte Kupfer, besonders bevorzugt werden 500 bis 3000 ppm Antimon und/oder Zinn eingesetzt.

In den nachfolgenden Beispielen sind, falls jeweils nicht anders angegeben,

    a) alle Mengen auf die Masse bezogen;
    b) alle Drücke 0,10 Mpa (abs.);
    c) alle Temperaturen 20°C;
    d) Silan M2 = Dimethyldichlorsilan.

Die Ergebnisse bei der Umsetzung von Silicium mit Chlormethan in Gegenwart von geeigneten Katalysatoren hängen neben der Zusammensetzung der Kontaktmasse auch vom Aufbau der Versuchsanlage und der Versuchsdurchführung ab. Um die beiden letztgenannten Parameter zu eliminieren und um die Vorteile der Erfindung eindeutig aufzeigen zu können, wurden die in den Beispielen 1 bis 13 dargestellten Versuche nach folgender standardisierter Vorgehensweise durchgeführt.

Siliciumpulver:
Granulat der Fa. Fesil ASA, Norwegen; Korngröße im Bereich 70 bis 240μm.

Kupferoxid: Hergestellt nach US-A 5,306,328, Beispiel 5.
    Alle anderen eingesetzten Chemikalien sind im Chemikalienhandel käuflich erhältlich, z.B. bei Fluka Chemie GmbH, Deutschland.

Versuchsanlage:
Labor-Wirbelschichtreaktor (senkrechtes Glasrohr mit einem Innendurchmesser von 25 mm und einer Höhe von 500 mm) mit Heizwicklung, Gasverteilungsfritte, Destillationsbrücke mit Solekühlung und Vorlagekolben.

Standardisierte Vorgehensweise:

120g Silicium, werden mit dem Kupfer-Katalysator, Zink-Promotor und 8mg Zinnpulver innig vermischt, in den Reaktor gefüllt und unter einem Stickstoffstrom von 40 l/h auf 340°C erwärmt. Anschließend werden 40 l/h Methylchlorid durch den Reaktor geleitet und die Kontaktmasse auf 395°C erwärmt. Nach einer bestimmten Induktionszeit beginnt die Silanbildung (Anspringzeit), die Reaktionstemperatur wird auf 360°C reduziert und 50ml Methylchlorsilane werden aufgefangen (Startphase).

Produktionsphase: Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{mg Methylchlorsilane in der Produktionsphase}}{\text{Oberfläche des Siliciums x Minuten in der Produktionsphase}}$$

Die Silanzusammensetzung der 30 ml Methylchlorsilane wurde mittels GC-Analyse in Gewichtsprozent ermittelt.

**Beispiel 1-5** (nicht erfindungsgemäß) :

Vergleichsbeispiele für Reaktionsverläufe von nicht aktivierten Kontaktmassen. Durchführung entsprechend dem Standardverfahren ohne HCl-Aktivierung, Einsatzmengen und Ergebnisse siehe nachstehend.

| | | |
|---|---|---|
| 1 | 6,0g CuO | 1,0g ZnO |
| 2 | 6,0g CuO | 1,7g ZnCl$_2$ |
| 3 | 7,5g CuCl | 1,7g ZnCl$_2$ |
| 4 | 3,0g CuO | 1,7g ZnCl$_2$ |
| 5 | 3,0g CuO | 1,0g ZnO |

Ergebnisse:

| Beispiel | Anspringzeit | PR2 | Gew.% Silan M2 |
|---|---|---|---|
| 1 | 30 Minuten | 119 | 86,4 |
| 2 | 27 Minuten | 174 | 87,8 |
| 3 | 18 Minuten | 102 | 83,0 |
| 4 | 17 Minuten | 159 | 83,0 |
| 5 | 20 Minuten | 116 | 85,0 |

**Beispiel 6-8** (erfindungsgemäß):

Die Durchführung erfolgte analog Beispiel 1 mit der Änderung, daß während der Aufheizphase dem Stickstoff HCl zudosiert wurde (Bedingungen siehe nachstehend).

| Beispiel | HCl (l/h) | Dauer (Minuten) | Temperaturbereich |
|---|---|---|---|
| 6 | 12 | 30 | 180°C |
| 7 | 3 | 10 | 120 - 180°C |
| 8 | 3 | 60 | 120 - 180°C |

Ergebnisse:

| Beispiel | Anspringzeit | PR2 | Gew.% Silan M2 |
|---|---|---|---|
| 6 | 15 Minuten | 280 | 83,0% |

(fortgesetzt)

| Beispiel | Anspringzeit | PR2 | Gew.% Silan M2 |
|---|---|---|---|
| 7 | 13 Minuten | 239 | 85,2% |
| 8 | 14 Minuten | 168 | 88,9% |

**Beispiel 9** (erfindungsgemäß) :

Die Durchführung erfolgte analog Beispiel 2 mit der Änderung, daß während der Aufheizphase dem Stickstoff HCl in einer Menge von 3l/h 10 Minuten lang im Temperaturbereich von 120 - 180°C zudosiert wurde.

| Anspringzeit | 10 Minuten |
|---|---|
| PR2 | 220 |
| Gew.% Silan M2 | 88,3 |

**Beispiel 10** (erfindungsgemäß):

Die Durchführung erfolgte analog Beispiel 3 mit der Änderung, daß während der Aufheizphase dem Stickstoff HCl in einer Menge von 3l/h 10 Minuten lang im Temperaturbereich von 120 - 180°C zudosiert wurde.

| Anspringzeit | 3 Minuten |
|---|---|
| PR2 | 126 |
| Gew.% Silan M2 | 84,9 |

**Beispiel 11** (erfindungsgemäß):

Die Durchführung erfolgte analog Beispiel 4 mit der Änderung, daß während der Aufheizphase dem Stickstoff HCl in einer Menge von 3l/h 10 Minuten lang im Temperaturbereich von 120 - 180°C zudosiert wurde.

| Anspringzeit | 12 Minuten |
|---|---|
| PR2 | 203 |
| Gew.% Silan M2 | 83,7 |

**Beispiel 12** (erfindungsgemäß):

Die Durchführung erfolgte analog Beispiel 5 mit der Änderung, daß während der Aufheizphase dem Stickstoff HCl in einer Menge von 3l/h 10 Minuten lang im Temperaturbereich von 120 - 180°C zudosiert wurde.

| Anspringzeit | 14 Minuten |
|---|---|
| PR2 | 135 |
| Gew.% Silan M2 | 85,0 |

**Patentansprüche**

1. Verfahren zur Direktsynthese von Methylchlorsilanen durch Umsetzung von Methylchlorid mit einer Kontaktmasse, welche Silicium, Kupferkatalysator, Zink-Promotoren und Zinn-und/oder Antimon-Promotoren enthält, bei dem eine Kontaktmasse eingesetzt wird, welche vor Einsatz in der Reaktionskampagne durch Behandlung mit HCl aktiviert worden ist.

2. Verfahren nach Anspruch 1, bei dem die Aktivierung bei 110°C bis 200°C stattfindet.

3. Verfahren nach Anspruch 1 oder 2, bei dem HCl dem Gasstrom zugemischt wird, der in der Reaktor-Aufheizphase durch den Reaktor geleitet wird.

**4.** Verfahren nach Anspruch 3, bei dem dem Gasstrom HCl in einer Menge von 1 bis 30 Vol.% zugemischt wird

**Claims**

**1.** Process for the direct synthesis of methylchlorosilanes by reacting methyl chloride with a catalyst composition which comprises silicon, copper catalyst, zinc promoters and tin promoters and/or antimony promoters, in which use is made of a catalyst composition which has been activated by treatment with HCl before being used in the reaction campaign.

**2.** Process according to Claim 1, in which the activation takes place at from 110°C to 200°C.

**3.** Process according to Claim 1 or 2, in which HCl is added to the gas stream which is passed through the reactor in the reactor heat-up phase.

**4.** Process according to Claim 3, in which HCl is added to the gas stream in an amount of from 1 to 30% by volume.

**Revendications**

**1.** Procédé de synthèse directe de méthylchlorosilanes par réaction de chlorure de méthyle avec une masse de contact comprenant du silicium, un catalyseur au cuivre, des promoteurs au zinc et des promoteurs à l'étain et/ou des promoteurs à l'antimoine, dans lequel on utilise une masse de contact qui a été activée par traitement avec du HCl avant d'être utilisée dans la campagne réactionnelle.

**2.** Procédé selon la revendication 1, dans lequel l'activation a lieu entre 110°C et 200°C.

**3.** Procédé selon la revendication 1 ou 2, dans lequel du HCl est ajouté au flux gazeux qui est passé à travers le réacteur dans la phase de chauffage du réacteur.

**4.** Procédé selon la revendication 3, dans lequel du HCl est ajouté au flux gazeux en une quantité de 1 à 30% en volume.